Europäisches Patentamt

European Patent Office

Office européen des brevets

(11) Publication number: 0 348 068 A2

## EUROPEAN PATENT APPLICATION

(21) Application number: 89305759.6

(51) Int. Cl.⁴: G09B 17/02

(22) Date of filing: 07.06.89

(30) Priority: 21.06.88 GB 8814655
18.05.89 GB 8911483

(43) Date of publication of application:
27.12.89 Bulletin 89/52

(84) Designated Contracting States:
AT BE CH DE ES FR GB GR IT LI LU NL SE

(71) Applicant: McCarthy, Declan Gerard Anthony
7 Church Hill Wood St. Mary Cray
Orpington Kent, BR5 2JD(GB)

(72) Inventor: McCarthy, Declan Gerard Anthony
7 Church Hill Wood St. Mary Cray
Orpington Kent, BR5 2JD(GB)

(74) Representative: Walters, Frederick James et al
Urquhart-Dykes & Lord 91 Wimpole Street
London W1M 8AH(GB)

(54) Multi-purpose reading aid.

(57) The invention relates to a multi-purpose reading aid, particularly for use by dyslexics, the elderly or those with similar sight-related reading difficulties. The reading aid comprises a lid and a base component, positionalbe in overlying relationship and hinged at a common edge, each with a transparent portion such that when the components are positioned in overlying relationship at least a part of the complete block is transparent to the reader. The transparent portion of the lid component of the reading aid comprises a magnifying portion which may be provided in the form of an integral, part-cylindrical convex lens. The reading aid may also comprise one or more middle components, positionalbe between the lid and base components in overlying relationship to the base and hinged to the lid and base component at an edge common to all components. At least a portion of each of these middle components is transparent such that when all components are positioned in overlying relationship at least a part of the complete block is transparent to the reader. The reading aid is designed such that one or more substantially transparent filters may be held in position below the lid component to enable the reader to view text through either the magnifying or the non-magnifying portion of the lid component in conjunction with any combination of filters as provided with the reading aid. These filters may be coloured or tinted in order to reduce contrast between black print and white paper. The filters alternatively comprise line guides or rulers.

FIG.4.

## MULTI-PURPOSE READING AID

This invention relates to a multi-purpose reading aid, particularly for use by dyslexics, the elderly or those with similar sight-related reading difficulties.

Reading aids are well-known devices ranging from spectacles and magnifying lenses which enlarge the printed word to line guides which help to fix the reader's attention onto a specific line of text. Coloured filters are also known to be of use in reading aids, since they can reduce the reflective glare of black print on a white background and hence provide a more pleasing visual field to the eyes. This reduction of contrast between black print and white paper is thought to greatly reduce reading problems suffered by dyslexics.

The disadvantages associated with the use of spectacles, particularly specially adapted spectacles, are that they are relatively expensive and also that some people, particularly adolescents, find them an embarrassment to wear. This in turn may lead to lack of confidence and a poor self image. The elderly may also have a habit of breaking spectacles which proves both inconvenient and expensive.

The line guide principle, which serves to concentrate the reader's attention, has proved effective in the treatment of many reading disorders. In particular it has been used by teachers as an aid for focussing a child's attention onto specific words on a page of printed text and for developing left-right co-ordination in reading.

Coloured filters have recently been incorporated into special plain lens spectacles for the dyslexic. This form of reading aid has the disadvantage of making some children feel stupid or embarrassed. Another disadvantage is that different coloured filters appear to be needed for different situations and patients. This renders the spectacles too expensive to provide a general solution to the dyslexic's problems.

It is an aim of the present invention to provide a multi-purpose reading aid which combines several of the aids as described above into a single, moderately low-cost, simple to use and unobtrusive device. More specifically, the features to be incorporated include a magnifying lens, a line guide and various interchangeable coloured filters. Each of these features will need to function both alone or in combination with one or more of the other features. The device must be simple and relatively inexpensive to manufacture and will preferably have a minimum of detachable parts which will also add robustness to the device, such that it can be safely used by both children and the elderly. It should be small enough conveniently to be portable on the person, for example, to fit into a child's blazer breast pocket. At the same time it should have a business-like appearance rather than being very obviously an "aid".

According to the present invention there is provided a reading aid comprising a lid and a base component, positionable in overlying relationship and hinged at a common edge, at least a portion of each of said components being transparent such that when positioned in overlying relationship, the components provide a block which is at least in part transparent, the transparent portion of said lid component comprising a magnifying portion.

The reading aid of the present invention may additionally comprise one or more middle components, positionable between said lid and base components in overlying relationship to the base component and being hinged to said lid and base components at an edge common to all components, at least a portion of each of said middle components being transparent such that when all components of the reading aid are positioned in overlying relationship, the components provide a block which is at least in part transparent.

The components of the reading aid may be made of glass, perspex or a plastics material. They may be completely transparent or simply comprise a transparent portion appropriately positioned so as to enable the reader to see through all components at once when positioned in overlying relationship.

The dimensions of the reading aid are not critical, however it is preferable that it be easily portable on the person. More preferably, it is small enough to fit inside a blazer pocket whilst also being large enough to allow the reader to scan a reasonable amount of text at any one time. To this end, the reading aid preferably has a width sufficient to scan the width of one page of a normal paper-back novel. This would also be sufficient width to cover two columns of newspaper print in most cases. The transparent portion of the reading aid when all components are postioned in overlying relationship will have a height dependant upon the number of lines of print which the reader may wish to view at one time. Preferably the height will be such as to allow the reader to view three lines of print simultaneously, thus enabling him to concentrate on the centre line whilst also referring back to the previous line and forward to the following line where necessary to orientate himself or to understand context.

Preferably each component of which the reading aid is comprised is a single injection moulded component. These components can then be produced from simple tools without side cores or moving parts and at a relatively low cost.

Preferably the magnifying portion of the lid component comprises a magnifying lens of part-cylindrical convex shape. More preferably, the lens is integral with the lid component.

Part of, for example, a third of the surface of the lens may be slightly textured in order to alleviate undesirable reflections which may form under certain lighting conditions. This textured part of the lens will preferably be an area not used for viewing, so that no adverse effect on the reader would result. The underside of the base component of the reading aid may also incorporate a slight prism section in order to bias the image from the lens towards the reader.

In one embodiment of the present invention, at least one of the transparent portions of the said components comprises means by which a piece of a substantially transparent material may be held positioned below the transparent portion of the lid component when all the components of the reading aid are positioned in overlying relationship. Preferably the holding means comprises a recess or recesses in that surface of a component nearest to the lid component, into which a piece of a substantially transparent material may be placed such that it is held in the required position. The holding means may alternatively comprise clips or slots which enable an inserted piece of a substantially transparent material to be held in place.

Also provided by the present invention is a reading aid as described above as being in accordance with the present invention, said reading aid additionally comprising one or more pieces of a substantially transparent material capable of being positioned below the transparent portion of the lid component by the holding means associated with one or more of the components of which the reading aid is composed.

These pieces of a substantially transparent material may be formed from glass, perspex or a substantially transparent plastics material. Preferably they comprise a strip of light, flexible plastics film.

The pieces of substantially transparent material may be wholly or partly tinted or coloured so as to provide a filter suitable for use by dyslexics. The coloured filters best used are those selected from the safety colour filters used by the theatrical and photographic industries.

The pieces of substantially transparent material may comprise a line guide. This may take the form of a filter of which the height of the transparent portion is equal to that of one line of text, the remainder of the filter being "masked", ie. opaque. Other forms of line guide which serve to concentrate the reader's attention onto a specific line of text are equally useful with the reading aid of the present invention.

The pieces of substantially transparent material may comprise a clear, tinted or coloured film marked out along its length in millimetres or other suitable measurement of length. This would enable the reader to measure lengths of text with the aid of the magnifying portion and/or the coloured tints, and provide an additional gauge.

The reading aid of the present invention may be provided with a storage case. This case may be formed from cardboard, cloth or a more substantial material similar to that used for conventional spectacle cases.

The reading aid of the present invention may also be provided with means for housing the pieces of substantially transparent material. This means may be integral with one of the components of the reading aid, for instance, it may be a recess in one of the components in which additional filters may be housed, or slots or clips, provided with one of the components, for holding one or more of the pieces of transparent material in position.

One embodiment of the present invention will now be described by means of the following example and with reference to the accompanying drawings, of which:

Figure 1 shows a plan view of a reading aid according to the present invention;

Figure 2 shows a section along the line A-A of Figure 1;

Figure 3 shows a side view of the reading aid shown in Figure 1;

Figure 4 is a schematic perspective view of the reading aid shown in Figure 1, showing the lid and base components open at the hinge;

Figure 5 shows a number of plastic filters provided with the reading aid as shown in Figures 1 to 4.

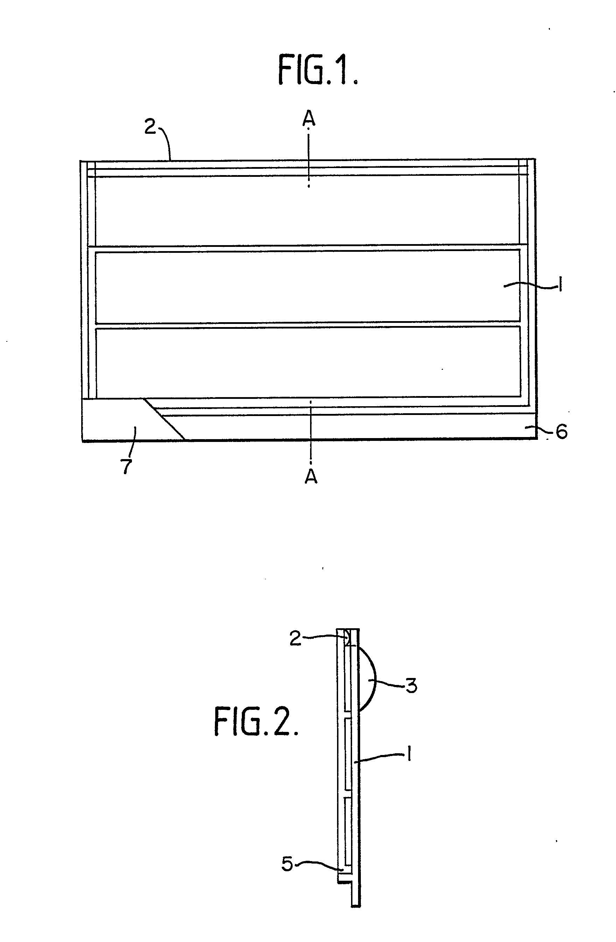

Referring firstly to Figure 1, a plan view of a reading aid is shown which comprises a lid component (1), this lid component comprising a single injection moulded component made from a wholly transparent plastics material. Along the edge (2) the lid component (1) is provided with a hinge by means of which it is attached to the base component, such that the two components may be opened and closed in a book-like manner. Projections (6) and (7) from the lid and base components respectively allow for easy opening of the reading aid.

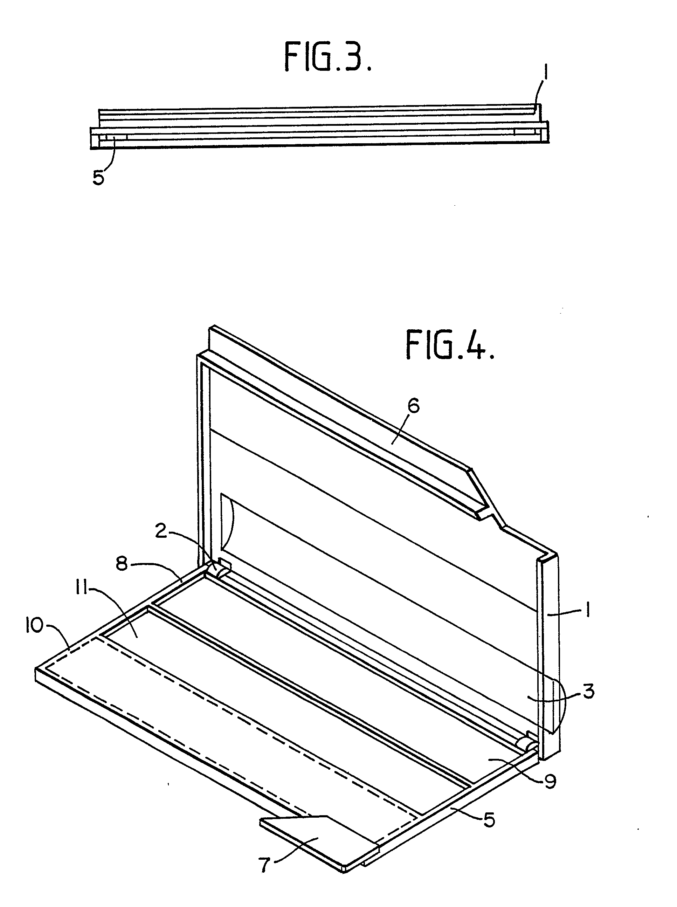

Figure 2 shows a section taken along the line A-A of Figure 1 and shows the form of the lens (3) as viewed in profile. The lens (3) is seen to be integral with the lid component (1). The base component (5) is also seen, this being hinged to the lid component at (2). The lid (1) and base (5) components are also seen in Figure 3.

Figure 4 shows the reading aid of Figure 1 in its "open" conformation. The surface of base component (5) facing towards the lid component (1) is provided with a recess (8) into which a strip of celluloid film (9) has been inserted. On closing the lid and base components together, the strip (9) is effectively "sandwiched" between the lid and base components and this allows the reader to view text through both the magnifying portion (3) and the filter strip (9) below it, which may take the form of a coloured or tinted filter, a line guide or a measurement gauge. A second recess similar to (8) and also running parallel to the edge (2) may be provided in the base component (5) where shown by the dotted line (10).

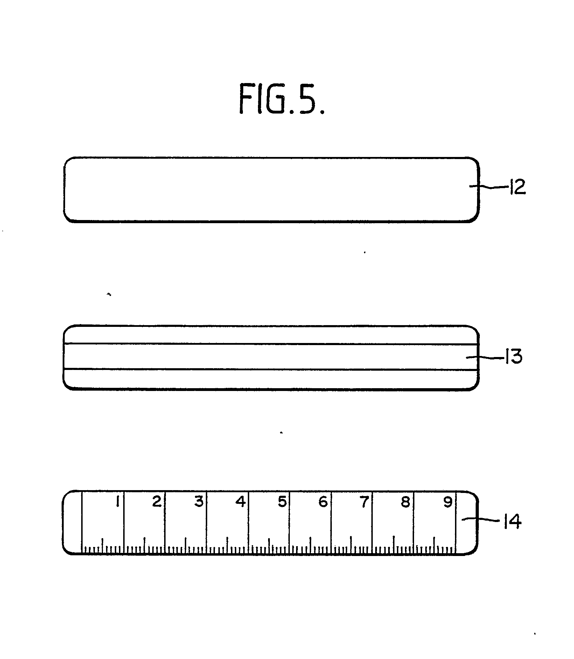

The base component (5) also has a central portion (11) running parallel to edge (2) which comprises a means for holding in position the interchangeable filters (see Figure 5) provided with the reading aid of Figure 1. This means may be a recess similar to (8) or (10), but a little deeper so as to accomodate all filters at once. It may alternatively comprise clips or slots or other similar housing means.

It will be appreciated that more than two such components may be hinged together at the edge (2), hence providing lid and base components and one or more middle components. This enables the reader to view text through the magnifying portion either alone,

It will be appreciated that more than two such components may be hinged together at the edge (2), hence providing lid and base components and one or more middle components. This enables the reader to view text through the magnifying portion either alone, or in combination with one or more coloured or guiding filters.

Figure 5 shows a number of filters as would be provided with the reading aid as shown in Figure 1. Each of these filters comprises an elongate strip of celluloid film of dimensions such as to fit into recess (8) or (10). Filter (12) is a tinted or coloured filter. Filter (13) is a line guide with opaque borders which mask all of the reading area bar the one central line of text. Filter (14) is a strip of clear film provided with millimetre markings.

The reading aid shown in Figure 1 would be provided with a number of filters as shown in Figure 5, including coloured or tinted filters of various shades and hues and one or more line guides or gauges as appropriate. This allows the reader to use the reading aid in a variety of ways and for a variety of purposes, for example:

A) For the magnification of text alone, viewing text through magnifying portion (3) and without insertion of any filters;

B) Viewing text through magnifying portion (3) with a coloured or tinted filter inserted into recess (8) so as to reduce contrast and overcome dyslexic and related problems. The reader is able to select a filter of the correct colour to best suit himself and the particular circumstances;

C) Viewing text through the magnifying portion (3) with the line guide (13) inserted into recess (8). A line guide filter may also be provided which is itself coloured or tinted, thereby allowing the reader the facilities of magnification, line guiding and reduction

D) Viewing the text through magnifying portion (3) in conjunction with filter (14) to provide a measurement of length easily viewed by those with sight difficulties.

E) Viewing text through the transparent, non-magnifying, portion of the lid component with a coloured or tinted filter (12) inserted into recess (10);

F) Viewing text through the non-magnifying portion of the lid component in conjunction with the line guide (13) in order better to concentrate on a specific line of text.

It will be appreciated that many other combinations are possible and that the reader is provided with a multi-purpose aid. As described above, the reading aid according to the present invention may be useful for many different classes of readers, ranging from the young or dyslexic through to the very elderly. Its advantages lie not only in this multi-functionality, but also in its compact and unobtrusive shape and in the simplicity and relatively low cost of its manufacture and use.

**Claims**

1. Reading aid comprising a lid and a base component, positionable in overlying relationship and hinged at a common edge, at least a portion of each of said components being transparent such that when positioned in overlying relationship, the components provide a block which is at least in part transparent, the transparent portion of said lid component comprising a magnifying portion.

2. A reading aid according to Claim 1, characterised in that it additionally comprises one or more middle components, positionable between said lid and base components in overlying relationship to the base component and being hinged to said lid and base components at an edge common to all components, at least a portion of each of said middle components being transparent such that when all components of the reading aid are positioned in overlying relationship, the components provide a block which is at least in part transparent.

3. A reading aid according to Claim 1 or Claim 2, characterised in that the magnifying portion is integral with the lid component.

4. A reading aid according to any of the preceding claims, characterised in that the magnifying portion of the lid component comprises a magnifying lens of part-cylindrical convex shape.

5. A reading aid according to any of the preceding claims, in that at least one of the transparent portions of the said components comprises means by which a piece of a substantially transparent material may be held positioned below the transparent portion of the lid component when all the components of the reading aid are positioned in overlying relationship.

6. A reading aid according to Claim 5, characterised in that the means by which the said piece of a substantially transparent material may be held comprises a recess in that surface of a component nearest to the lid component into which one of the pieces of a substantially transparent material may be placed, said piece of transparent material being held positioned in said recess when the components of the reading aid are positioned in overlying relationship.

7. A reading aid according to any of the preceding claims, characterised in that it additionally comprises one or more pieces of a substantially transparent material, said pieces being capable of being positioned below the transparent portion of the lid component by means of holding means provided with or included in one or more of the components of which the reading aid is composed.

8. A reading aid according to Claim 7, characterised in that the said pieces of a substantially transparent material comprise strips of a light, flexible plastics material.

9. A reading aid according to Claim 7 or Claim 8, characterised in that the said pieces of a substantially transparent material are wholly or partly tinted or coloured.

10. A reading aid according to any of Claims 7 to 9, characterised in that at least one of the said pieces of a substantially transparent material comprises a line guide intended to focus a reader's attention on a specific line of text.

11. A reading aid according to any of Claims 7 to 10, characterised in that one or more of the said pieces of a substantially transparent material comprises a measurement of length.

12. A reading aid according to any of the preceding claims, characterised in that the width of the transparent portion of the reading aid when all components are positioned in overlying relationship is sufficient to scan the width of one page of a conventional paper-back novel.

13. A reading aid according to any of the preceding claims, characterised in that the height of the transparent portion of the reading aid when all components are positioned in overlying relationship is sufficient to cover the height of three lines of normal printed text.

# FIG.1.

# FIG.2.

# FIG.3.

# FIG.4.

# FIG.5.

12

13

14